# DEMANDE DE BREVET EUROPEEN

(11) **EP 0 598 157 A1**
(43) Date de publication de la demande: **25.05.1994**
(21) Numéro de dépôt: 92403508.2
(22) Date de dépôt: 21.12.1992
(51) Int. Cl.: B65B 27/12, B65D 63/08, F16B 3/06

(54) **Dispositif de liage en particulier de balle de déchets industriels ou ménagers**

(30) Priorité: 18.11.1992 FR 9213885
(71) Demandeur: STERNE S.A., F-45590 Saint-Cyr en Val (FR)
(72) Inventeur: Pierron, Alain Gérard, F-45160 Olivet (FR)
(74) Mandataire: Thinat, Michel

(57) **Abrégé**

La présente invention concerne un dispositif de liage de balle de déchets industriels ou ménagers.

Le dispositif est caractérisé en ce qu'il comprend à au moins l'une des parties latérales du liant (1 ; 2) sensiblement parallèles à la direction d'une force de compression de la balle (B) un moyen de fixation d'une extrémité du liant à l'autre extrémité de celui-ci et logé dans un manchon (11) de façon à bloquer l'extrémité correspondante du liant sous l'action d'une force de réaction opposée à la force de compression de la balle (B) et résultant de l'élasticité de cette dernière après relâchement de la force de compression.

L'invention trouve application dans le domaine du recyclage des déchets industriels ou ménagers.

## Description

La présente invention concerne un dispositif de liage en particulier de balle de déchets industriels ou ménagers tels que du papier.

Jusqu'à maintenant, chaque balle de papier comprimée ou compactée par une presse à balle était liée manuellement. Ainsi, l'opérateur de la presse à balle positionnait le liant dans le fond du caisson de la presse, enroulait manuellement le liant autour de la balle et ficelait le liant également de façon manuelle.

La présente invention a pour but d'éliminer l'inconvénient ci-dessus du liage entièrement manuel de balles de papier en proposant un dispositif assurant un liage automatique de balles de papier d'une presse à balle.

A cet effet, le dispositif de liage de l'invention est caractérisé en ce qu'il comprend à au moins l'une des parties latérales du liant sensiblement parallèles à la direction de la force de compression de la balle un moyen de fixation par blocage automatique, sous l'action d'une force de réaction opposée à la force de compression de la balle et résultant de l'élasticité de cette dernière après relâchement de la force de compression, d'une extrémité du liant à l'autre extrémité de celui-ci.

Avantageusement, le dispositif comprend également à l'autre opposée des parties latérales précitées du liant un autre moyen de fixation par blocage automatique, sous l'action de la force de réaction précitée, d'une extrémité de ladite partie latérale opposée à une autre extrémité de cette partie.

De préférence, le dispositif comprend un second liant dont les parties latérales opposées parallèles à la direction de la force de compression de la balle comprennent respectivement deux moyens de fixation par blocage automatique d'une extrémité du liant à l'autre extrémité correspondante de celui-ci sous l'action de la force de réaction précitée.

Les deux liants précités comprennent chacun deux pièces supérieure et inférieure sensiblement en forme de U, les branches de l'une des pièces en U s'engageant respectivement dans les branches de l'autre pièce en U lors du liage de la balle et étant bloquées automatiquement dans celles-ci par les deux moyens de fixation précités.

Les deux pièces inférieures identiques en U respectivement des deux liants sont solidaires d'une plaque inférieure relativement rigide disposée au fond du caisson de la presse à balle et les deux pièces supérieures identiques en U respectivement des deux liants sont solidaires d'une plaque supérieure disposée au-dessus de la balle et poussée vers la plaque inférieure par le plateau de compression de la presse de façon à comprimer la balle et assurer automatiquement le liage de la balle comprimée.

Chaque moyen de fixation comprend une bague tronconique axialement fendue emprisonnée dans un alésage tronconique de l'une des extrémités du liant dont l'autre extrémité traverse la bague tronconique pour y être retenue par coincement exercé par la bague tronconique en butée dans l'alésage tronconique sous l'action de la force de réaction précitée.

Avant l'opération de liage, le diamètre de l'extrémité précitée du liant à retenir dans la bague tronconique est légèrement supérieur au diamètre du perçage traversant la bague tronconique.

L'alésage tronconique précité est réalisé dans un manchon fixé, par exemple par soudage, à l'extrémité correspondante du liant.

La bague tronconique précitée est en une matière plastique déformable.

L'extrémité du liant comportant l'alésage tronconique est en forme de tube coaxial à l'alésage tronconique.

Le manchon précité comprend un orifice tronconique d'entrée situé à l'opposé de l'extrémité correspondante de liant.

Chaque pièce supérieure en U précitée est réalisée à partir d'une tige métallique et chaque pièce inférieure en U précitée est réalisée à partir d'un tube cylindrique dont les deux extrémités comprennent respectivement deux manchons à alésages tronconiques.

Les plaques inférieure et supérieure précitées sont en carton épais.

L'invention sera mieux comprise, et d'autres buts, caractéristiques, détails et avantages de celle-ci apparaîtront plus clairement au cours de la description explicative qui va suivre faite en référence aux dessins schématiques années donnés uniquement à titre d'exemple illustrant deux modes de réalisation de l'invention, et dans lesquels :
La figure 1 représente le dispositif de liage de l'invention suivant un premier mode de réalisation en position avant liage d'une balle de déchets et comprenant deux liants ;
La figure 2 est une vue en coupe longitudinale agrandie de la partie cerclée en II représentant un moyen de blocage d'une extrémité du liant dans l'autre extrémité de celui-ci ;
La figure 3 est une vue en coupe suivant la ligne III-III de la figure 2 ;
La figure 4 représente un second mode de réalisation du dispositif de liage de l'invention à un seul liant d'une balle de déchets ; et
La figure 5 est une vue en coupe semblable à celle de la figure 2 où le moyen de fixation bloque une extrémité du liant dans l'autre extrémité de celui-ci.

L'invention va être décrite en référence au liage de balles de papier compactées par une presse à balle, mais il est bien entendu qu'elle s'applique également au liage de tout autre article devant être maintenu à un état compacté.

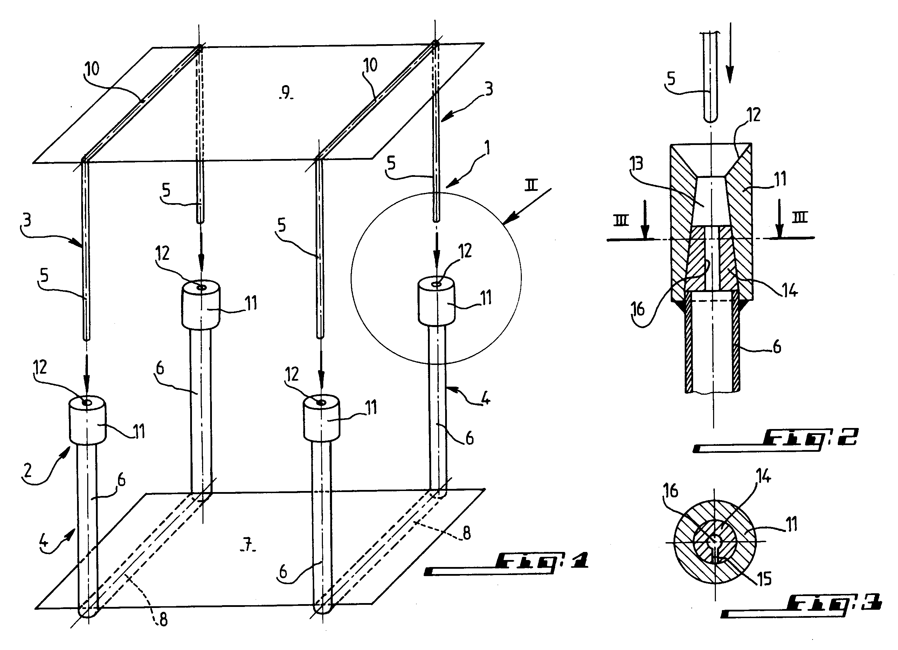

La figure 1 représente le mode de réalisation préféré du dispositif de liage d'une balle de papier de l'invention.

Selon ce mode de réalisation, le dispositif comprend deux liants identiques 1, 2 constitués chacun par deux pièces sensiblement en forme de U respectivement supérieure 3 et inférieure 4 telles que les deux branches parallèles 5 de la pièce en U supérieure 3 s'engagent, lors du liage d'une balle de papier, respectivement dans les deux branches parallèles 6 de la pièce en U inférieure correspondante 4 pour y être bloquées automatiquement par des moyens de fixation comme cela sera décrit ultérieurement.

Les deux pièces en U inférieures 4 sont fixées à une plaque inférieure 7 relativement rigide, de préférence en carton épais, destinée à être positionnée dans le fond du caisson (non représenté) d'une presse à balle verticale classique. Comme représenté, la plaque inférieure 7 repose sur les deux branches de liaison 8 des branches parallèles 6 respectivement des deux pièces inférieures 4 qui sont situées respectivement dans deux plans parallèles et perpendiculaires à la plaque inférieure 7. Cette dernière est fixée aux branches de liaison 8 par tout moyen approprié, par exemple par collage.

Les deux pièces en U supérieures 3 sont fixées à une plaque supérieure 9 pouvant être positionnée dans le plateau de compression (non représenté) de la presse à balle. Les deux pièces en U supérieures 3 sont situées respectivement dans deux plans parallèles perpendiculaires à la plaque supérieure 9 et ont leurs branches de liaison 10 fixées, par exemple par collage, sur la plaque 9 à une distance identique à la distance séparant les deux pièces en U inférieures 4.

Chaque pièce en U supérieure 3 est réalisée à partir d'une tige métallique en fer ou en acier tandis que chaque pièce en U inférieure 4 est réalisée à partir d'un tube cylindrique, mais il est bien entendu que chaque pièce en U supérieure 3 peut avoir la configuration d'une pièce en U inférieure 4 et réciproquement.

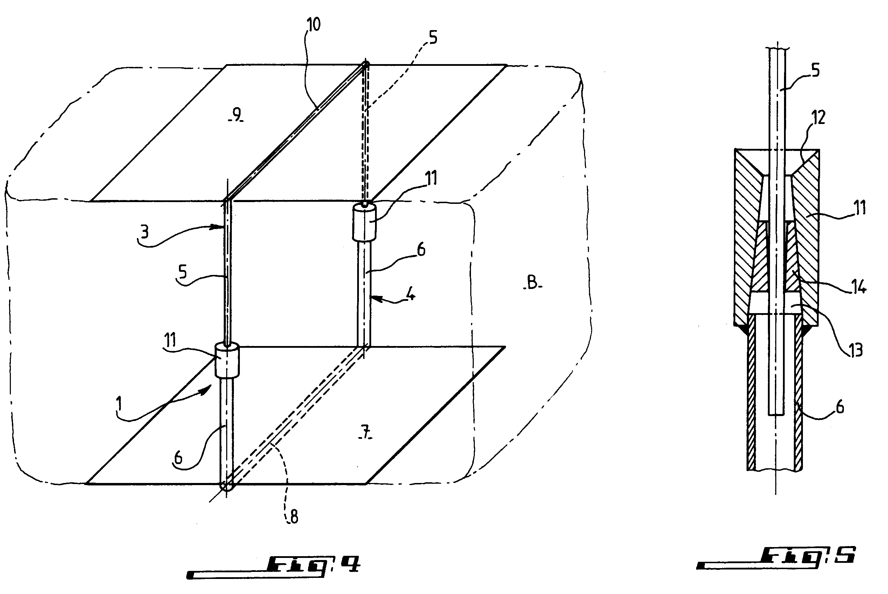

Comme représenté aux figures 1 à 3, chaque branche tubulaire 6 des pièces en U inférieures 4 comporte à son extrémité un manchon extérieurement cylindrique 11 fixé, par exemple par soudage, coaxialement à la branche 6. Chaque manchon 11 comporte un orifice tronconique d'entrée 12 facilitant l'introduction de l'extrémité d'une branche 5 correspondante d'une pièce en U supérieure 3 et prolongé par un alésage tronconique 13 débouchant à l'extrémité du manchon 11 opposée à l'orifice 12. Une bague tronconique 14 est emprisonnée dans l'alésage tronconique 13 du manchon 11 et retenue, en position inactive, dans cet alésage par l'extrémité distale de la branche tubulaire 6 engagée dans l'alésage 13 sur une courte distance. La bague tronconique 14 est de préférence réalisée en une matière plastique déformable et comporte une fente 15 s'étendant axialement sur toute la longueur de la bague 14 qui comporte également un perçage central 16 traversant entièrement la bague 14 de façon à déboucher dans l'extrémité de la branche tubulaire 6 coaxialement à celle-ci. Le diamètre du perçage 16 est légèrement inférieur au diamètre d'une branche 5 d'une pièce en U supérieure 3.

Le mode de réalisation représenté en figure 4 n'utilise qu'un seul liant au lieu de deux liants comme représenté en figure 1, et mise à part cette différence, le liant de la figure 4 est rigoureusement identique à chaque liant 1, 3 de la figure 1.

Le principe de liage d'une balle de papier ressort déjà en partie de la description du dispositif ci-dessus et va être maintenant expliqué en référence à la figure 4.

Tout d'abord, la plaque inférieure 7 munie de la pièce en U inférieure 4 est disposée au fond du caisson de la presse à balle et positionnée précisément dans celui-ci par exemple par un logement de forme conjuguée à celle de la plaque inférieure 7. Les déchets industriels ou ménagers à compacter, par exemple du papier, sont introduits dans la presse à balle et le plateau de compression de cette dernière auquel est associée et positionnée la plaque supérieure 9 munie de la pièce en U supérieure 3 est poussé contre la balle B de sorte que la plaque supérieure 9 en appui sur la balle B soit également poussée vers la plaque inférieure 7. Sous l'action de la presse à balle, la balle B est ainsi comprimée jusqu'à ce que les extrémités des branches 5 de la pièce en U supérieure 3 pénètrent respectivement dans les deux manchons 11 associés aux branches 6 de la pièce en U inférieure 4 de telle façon que chaque extrémité de branche 5 traverse la bague tronconique correspondante 14 en s'étendant dans l'extrémité tubulaire de la branche 6. Lors de la remontée du plateau de compression de la presse à balle se traduisant ainsi par un relâchement de la force de compression, l'élasticité de la balle B est telle qu'elle exerce une force de réaction opposée au sens de la force de compression et tendant à faire remonter la plaque supérieure 9 par rapport à la plaque inférieure 7. Ce mouvement de remontée provoque le déplacement quasi simultané des deux branches 5 de la pièce 3 et des deux bagues tronconiques 14 associées par rapport aux manchons 11 jusqu'à ce que chaque bague tronconique 14 vienne en appui forcé contre la portion tronconique correspondante de l'alésage 14 de façon à comprimer la bague 14 et bloquer ainsi par coincement ou serrage l'extrémité de la branche correspondante 5 de la pièce en U supérieure 3. De la sorte, le liant formé par les deux pièces en U 3 et 4 solidarisées entre elles par les moyens de fixation constitués par les bagues tronconiques 14 ainsi que les deux plaques supérieure 9 et inférieure 7 retiennent la balle B en position compactée par la presse à balle.

Bien entendu, le mode de réalisation de la figure 1 fonctionne de façon identique à celui de la figure 4 et résiste davantage aux efforts de réaction dûs à l'élasticité de la balle tendant à écarter l'une de l'autre les deux plaques 7 et 9.

Le dispositif de liage conforme à l'invention affranchit donc l'opérateur d'opérations manuelles fastidieuses de positionnement d'un liant dans le fond d'un caisson d'une presse à balle, d'enroulement manuel du liant autour de la balle et de ficelage également manuel de ce liant. Le dispositif de l'invention procure un positionnement précis les uns par rapport aux autres des différents éléments constituant le ou les liants et assure automatiquement le liage de balles de déchets industriels ou ménagers.

Par ailleurs, l'invention n'est nullement limitée aux modes de réalisation ci-dessus décrits. D'autres variantes de réalisation sont envisageables. Ainsi, il est possible de réaliser un ou plusieurs liants d'une balle de déchets en forme de boucle entourant la balle et dont l'une des extrémités est engagée dans un manchon 11 de l'autre extrémité de la boucle de façon à y être fixée par blocage à l'aide d'une bague tronconique 14 dans le manchon 11 et identique à la bague 14 décrite précédemment. Ce mode de réalisation est moins avantageux que ceux décrits en référence aux figures 1 et 4 mais permet toujours une fixation automatique des extrémités du liant par action de la force d'élasticité de la balle après relâchement de la force de compression exercée sur celle-ci par le plateau de compression de la presse à balle.

## Revendications

1. Dispositif de liage en particulier de balle de déchets industriels ou ménagers, tels que du papier, par au moins un liant enserrant une balle comprimée par une presse, caractérisé en ce qu'il comprend à au moins l'une des parties latérales du liant (1 ; 2) sensiblement parallèles à la direction de la force de compression de la balle (B) un moyen de fixation (14) par blocage automatique, sous l'action d'une force de réaction opposée à la force de compression de la balle et résultant de l'élasticité de cette dernière après relâchement de la force de compression, d'une extrémité du liant à l'autre extrémité de celui-ci.

2. Dispositif selon la revendication 1, caractérisé en ce qu'il comprend également à l'autre opposée des parties latérales précitées du liant un autre moyen de fixation (14) bloquant automatiquement, sous l'action de la force de réaction précitée, une extrémité de ladite partie latérale opposée à une autre extrémité de cette partie.

3. Dispositif selon la revendication 1 ou 2, caractérisé en ce qu'il comprend un second liant (1 ; 2) dont les parties latérales opposées parallèles à la direction de la force de compression de la balle (B) comprennent respectivement deux moyens de fixation (14) par blocage automatique d'une extrémité du liant (1 ; 2) à l'autre extrémité correspondante de celui-ci sous l'action de la force de réaction précitée.

4. Dispositif selon la revendication 3, caractérisé en ce que les deux liants (1 ; 2) précités comprennent chacun deux pièces supérieure (3) et inférieure (4) sensiblement en forme de U, les branches (5) de l'une (3) des pièces en U s'engageant respectivement dans les branches (6) de l'autre pièce en U (4) lors du liage de la balle (B) et étant bloquées automatiquement dans celles-ci par les deux moyens de fixation (14).

5. Dispositif selon les revendications 1 et 4, caractérisé en ce que les deux pièces inférieures identiques en U (4) respectivement des deux liants (1 ; 2) sont solidaires d'une plaque inférieure relativement rigide (7) disposée au fond du caisson de la presse à balle précitée et les deux pièces supérieures identiques en U (3) respectivement des deux liants (1 ; 2) sont solidaires d'une plaque supérieure (9) au-dessus de la balle (B) et poussée vers la plaque inférieure (7) par le plateau de compression de la presse de façon à comprimer la balle (B) et assurer automatiquement le liage de la balle comprimée.

6. Dispositif selon l'une des revendications précédentes, caractérisé en ce que chaque moyen de fixation précité comprend une bague tronconique axialement fendue (14) emprisonnée dans un alésage tronconique (13) de l'une des extrémités du liant (1 ; 2) dont l'autre extrémité traverse la bague tronconique (14) pour y être retenue par coincement exercé par la bague tronconique (14) en butée dans l'alésage tronconique (13) sous l'action de la force de réaction précitée.

7. Dispositif selon la revendication 6, caractérisé en ce que, avant l'opération de liage, le diamètre de l'extrémité précitée du liant (1 ; 2) à retenir dans la bague tronconique (14) est légèrement supérieur au diamètre du perçage (13) traversant la bague tronconique (14).

8. Dispositif selon la revendication 6 ou 7, caractérisé en ce que l'alésage tronconique (13) précité est réalisé dans un manchon (11) fixé, par exemple par soudage, à l'extrémité correspondante du liant (1 ; 2).

9. Dispositif selon l'une des revendications 6 à 8, caractérisé en ce que la bague tronconique (14) précitée est en une matière plastique déformable.

10. Dispositif selon l'une des revendications 6 à 9, caractérisé en ce que l'extrémité du liant (1 ; 2) comportant l'alésage tronconique (13) est en forme de tube coaxial à l'alésage.

11. Dispositif selon la revendication 8, caractérisé en ce que le manchon (11) précité comprend un orifice tronconique d'entrée (12) à l'opposé de l'extrémité correspondante du liant.

12. Dispositif selon les revendications 5 à 11, caractérisé en ce que les deux pièces supérieures en U (3) précitées sont réalisées chacune à partir d'une tige métallique et les deux pièces inférieures en U (4) sont réalisées chacune à partir d'un tube cylindrique dont les deux extrémités comprennent respectivement deux manchons (11) à alésages tronconiques (13).

13. Dispositif selon l'une des revendications 5 à 12, caractérisé en ce que la plaque inférieure (7) est positionnée au fond du caisson de la presse à balle, par exemple dans un logement du caisson de forme conjuguée à celle de la plaque (7) et la plaque supérieure (9) est positionnée relativement au plateau de compression de la presse, par exemple par un logement du plateau de forme conjuguée à celle de la plaque (9).

14. Dispositif selon l'une des revendications 5 à 13, caractérisé en ce que les plaques inférieure (7) et supérieure (9) précitées sont en carton épais.
